# FASCICULE DE BREVET EUROPEEN

(11) **EP 2 232 030 B1**
(45) Date de publication et mention de la délivrance du brevet: **18.05.2016**
(21) Numéro de dépôt: 08867826.3
(22) Date de dépôt: 28.11.2008
(51) Int. Cl.: F02B 29/04, F28D 9/00, F28F 9/24

(54) **REFROIDISSEUR D'AIR DE SURALIMENTATION NOTAMMENT POUR VEHICULE AUTOMOBILE**
LADELUFTKÜHLER FÜR FAHRZEUGE
SUPERCHARGE AIR COOLER, IN PARTICULAR FOR AN AUTOMOBILE

(30) Priorité: 20.12.2007 FR 0708929
(43) Date de publication de la demande: 29.09.2010
(73) Titulaire: Valeo Systèmes Thermiques, 78321 Le Mesnil Saint-Denis Cedex (FR)
(72) Inventeur: GARRET, Paul, 77250 Veneux de Sablons (FR); VALLEE, Nicolas, 51110 Bazancourt (FR); NAUDIN, Yoann, 08300 Saint-loup-en-champagne (FR)
(74) Mandataire: Metz, Gaëlle
(86) Numéro de dépôt international: PCT/EP2008/066392
(87) Numéro de publication internationale: WO 2009/083366

(56) Documents cités:
- EP-A- 1 544 564
- EP-A- 1 830 048
- WO-A-2006/029761
- WO-A-2006/125919

## Description

L'invention concerne un refroidisseur d'air de suralimentation notamment pour véhicule automobile.

Elle concerne plus particulièrement un refroidisseur d'air de suralimentation comportant au moins un faisceau d'échange de chaleur réalisé par un empilement de plaques définissant des premiers canaux pour la circulation d'un premier fluide et des seconds canaux pour la circulation d'un second fluide.

Dans un tel refroidisseur, l'air de suralimentation est refroidi par un fluide, qui pourra être du liquide de *refroidissement d'un circuit dit basse température, pour pouvoir être admis dans des chambres de combustion du moteur à une température plus basse ce qui permet d'améliorer le rendement du moteur du véhicule automobile.

On entend par air de suralimention aussi bien de l'air de suralimentation seul qu'un mélange d'air de suralimentation avec des gaz d'échappement recirculés.

Le document DE 199 02 504 décrit un tel refroidisseur d'air de suralimentation. Dans ce document, les premiers canaux servent à la circulation d'un gaz, plus particulièrement de l'air de suralimentation à refroidir et les seconds canaux servent à la circulation d'un liquide, plus particulièrement du liquide de refroidissement moteur. Les documents EP 1544564A et WO 2006/125919A montrent également des refroidissents d'air d'air de sur alimentation.

Afin d'améliorer les performances d'un tel refroidisseur d'air de suralimentation, il est nécessaire d'avoir un échange de chaleur efficace entre l'air de suralimentation et le liquide de refroidissement.

L'invention vise à améliorer la situation.

Elle propose à cet effet un refroidisseur d'air de suralimentation selon la revendication 1 et tel que décrit plus haut dans lequel les plaques sont constituées de tôles embouties.

Un tel choix permet de réaliser simultanément, entre autre, des emboutis localisés, des passes de circulation de fluide, des tubulures de liaison entre plaques et favorise ainsi l'échange de chaleur tout en simplifiant la fabrication du faisceau.

Les plaques pourront comporter des emboutis d'une hauteur strictement inférieure à la hauteur des canaux pour le second fluide. Ces emboutis sont aptes à créer des turbulences dans ledit second fluide circulant dans les seconds canaux.

Ainsi, un refroidisseur d'air de suralimentation selon l'invention est muni de moyens de perturbation du second fluide circulant dans les seconds canaux. Ces moyens de perturbations améliorent l'échange de chaleur entre le premier fluide circulant dans les premiers canaux et le second fluide circulant dans les seconds canaux.

D'autres avantages et caractéristiques de l'invention apparaîtront mieux à la lecture de la description à titre illustratif et non limitatif d'exemples issus des figures sur les dessins annexés dans lesquels :
La figure 1 représente une vue schématique éclatée d'un refroidisseur d'air de suralimentation selon l'invention.
La figure 2 représente une vue schématique d'un faisceau d'échange de chaleur selon un autre mode de réalisation de l'invention.
La figure 3 représente, de manière schématique, un autre détail de l'assemblage de plaques appartenant au faisceau d'échange de chaleur selon l'invention.
La figure 4 représente une plaque du faisceau d'échange de chaleur selon l'invention.
La figure 5A représente, en vue de coupe, un détail de l'assemblage d'une paire de plaques appartenant au faisceau d'échange de chaleur selon l'invention et formant un dit second canal pour la circulation d'un dit second fluide.
La figure 5B représente, en perspective, un détail de l'assemblage d'une paire de plaques appartenant au faisceau d'échange de chaleur selon l'invention et formant un dit second canal pour la circulation d'un dit second fluide.
La figure 6 représente une vue d'un détail d'une plaque conforme à la présente invention.

L'invention concerne un refroidisseur d'air de suralimentation comportant au moins un faisceau 12 d'échange de chaleur et éventuellement un boîtier 18, à l'intérieur duquel le faisceau 12 est logé.

Le boîtier 18 est muni d'une tubulure d'entrée 26 pour un premier fluide et d'une tubulure de sortie 28 pour le premier fluide.

La tubulure d'entrée 26 pour le premier fluide est, dans cet exemple, situé sur une paroi 30 dite latérale du boîtier 18.

La tubulure de sortie pour le premier fluide est, quant à elle, prévue sur une paroi 32 dite de fond du boîtier 18.

Le boîtier 18 pourra être réalisé, par exemple, en matière plastique ou en métal.

Il est aussi possible de prévoir que le faisceau 12 soit entouré d'un carter sur lequel sont rapportées des boites d'entrée et/ou de sortie pour un premier fluide.

Le faisceau d'échange de chaleur 12 comporte un empilement de plaques 20 qui sont parallèles entre elles. Le faisceau 12 comporte deux plaques d'extrémités respectivement appelées première 14 et deuxième 16 plaques d'extrémité.

L'empilement de plaques pourra, par exemple, présenter une hauteur inférieure à 150 mm, de préférence d'environ 70 mm.

La première plaque d'extrémité 14 se situe, une fois le faisceau 12 d'échange de chaleur inséré dans le boîtier 18, en vis-à-vis de la paroi de fond 32 du boîtier 18.

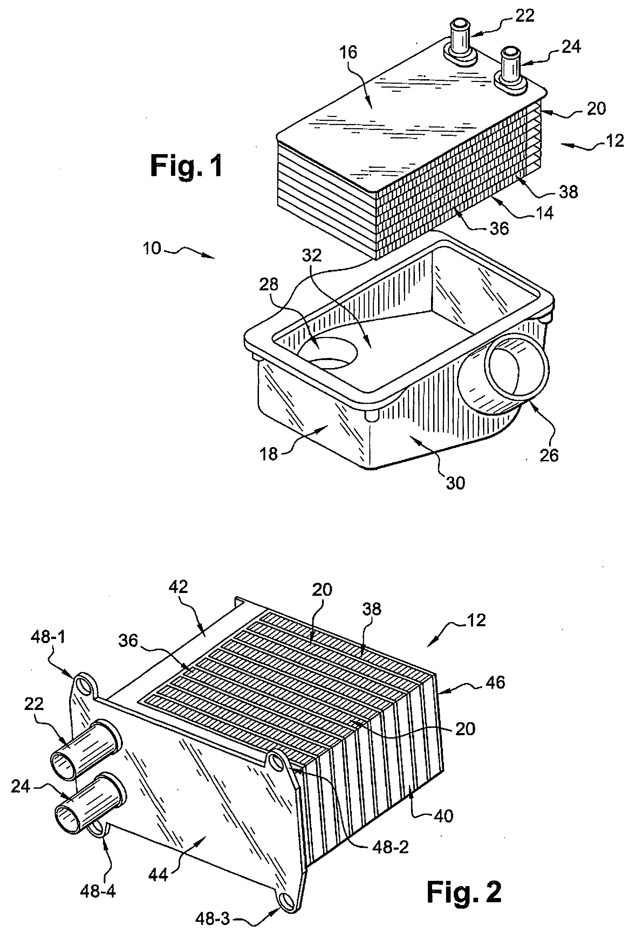

La deuxième plaque d'extrémité 16 comporte, dans le mode de réalisation de la figure 1, des tubulures d'entrée 22 et de sortie 24 pour un second fluide.

Dans le mode de réalisation de la figure 1, la deuxième plaque d'extrémité 16 forme le couvercle du boîtier 18.

Les plaques 20 sont, par exemple, de forme générale rectangulaire avec deux grands cotés et deux petits cotés. Les plaques 20 sont des plaques embouties.

Les petits cotés d'une plaque 20 pourront présenter une longueur comprise, par exemple, entre 60 et 120 mm.

Les grands cotés d'une plaque 20 pourront présenter une longueur comprise, par exemple, entre 160 et 400 mm, de préférence entre 200 et 280 mm.

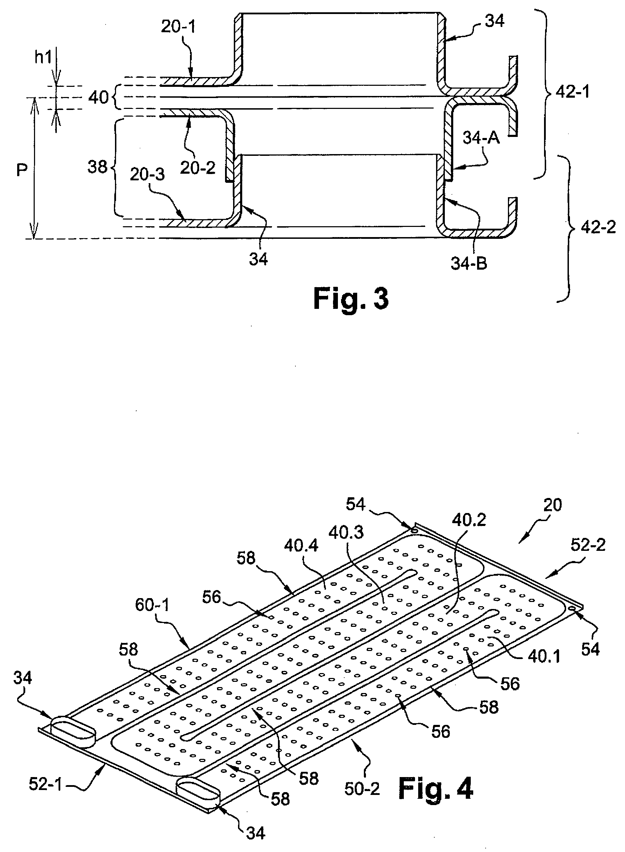

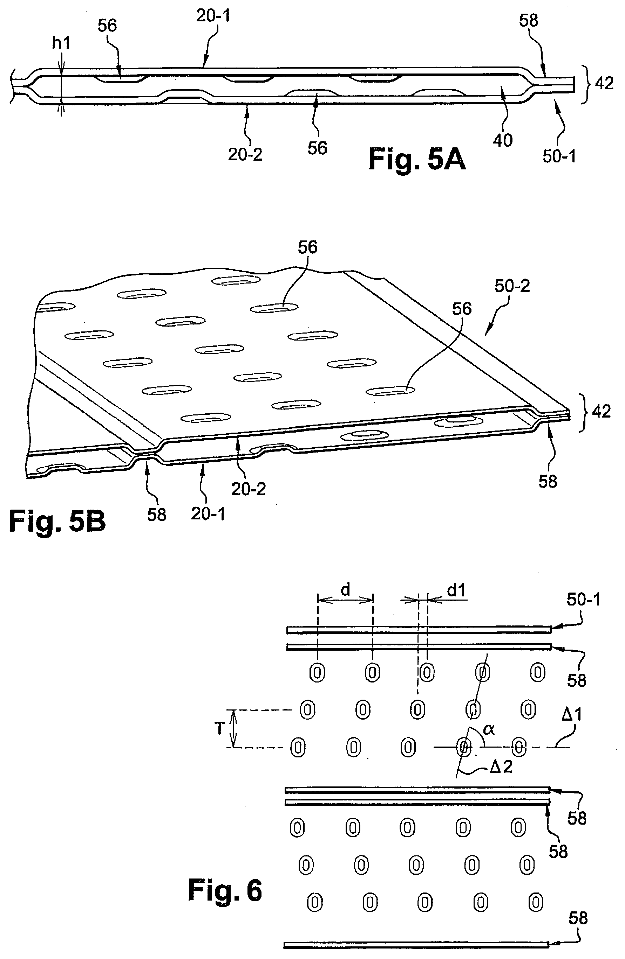

Les plaques 20 comportent en outre deux bossages 34, réalisés sous la forme d'emboutis, visibles aux figures 4 et 5 et qui seront décrits plus loin. Les bossages 34 sont munis d'ouvertures pour le passage du second fluide. Les bossages 34 sont disposés à proximité d'un des petits cotés des plaques 20.

Les bossages 34 sont formés venus de matière des plaques 20 lors de leurs emboutissages. Autrement dit, les bossages 34 sont en continuité de matière avec les plaques 20.

Les plaques 20 sont disposées par paires qui seront décrites plus loin. L'espacement entre les deux plaques 20 formant une paire de plaques permet de définir un second canal 40 pour la circulation du second fluide. Autrement dit, les seconds canaux 40 pour la circulation du second fluide sont définis par deux plaques adjacentes.

Le faisceau 12 comporte, ici, des intercalaires ondulés 36 disposés à chaque fois entre les plaques prévues en vis-à-vis de deux paires de plaques voisines. Ils sont brasés aux plaques 20. L'espace aménagé entre les plaques prévues en vis-à-vis de deux paires de plaques voisines et dans lequel est inséré l'intercalaire 36 permet de définir des premiers canaux 38 pour la circulation d'un premier fluide. L'intercalaire 36 a pour fonction de perturber le premier fluide de manière à ce que celui-ci échange plus de chaleur avec le second fluide.

Selon un mode de réalisation de l'invention, la distance séparant des plaques prévues en vis-à-vis de deux paires de plaques voisines, c'est-à-dire la hauteur du premier canal est comprise entre 3 et 15 mm, de préférence 5,2 mm.

Dans un refroidisseur d'air de suralimentation, le premier fluide est de l'air de suralimentation et le second fluide du liquide de refroidissement du moteur ou du liquide de refroidissement d'un circuit dit basse température.

L'air de suralimentation pénètre dans le refroidisseur d'air de suralimentation 10 par la tubulure d'entrée 26 pour le premier fluide, circule dans le faisceau 12 d'échange de chaleur dans les premiers canaux 38 puis sort de l'échangeur de chaleur 10 par l'intermédiaire de la tubulure de sortie 28 pour le premier fluide.

Le liquide refroidissement moteur pénètre, quant à lui, dans le faisceau 12 d'échange de chaleur, par la tubulure d'entrée 22 pour le second fluide, circule dans les seconds canaux 40 du faisceau 12 d'échange de chaleur pour échanger de la chaleur avec l'air de suralimentation à refroidir et quitte ensuite le faisceau 12 d'échange de chaleur par la tubulure de sortie 24 pour le second fluide.

Autrement dit, le faisceau 12 d'échange de chaleur comporte un empilement de plaques 20 délimitant des premiers canaux 38 pour le gaz à refroidir et dans lesquels sont présents les intercalaires ondulés 36, et des seconds canaux 40 pour la circulation du liquide de refroidissement.

La figure 2 représente une vue schématique d'un faisceau d'échange de chaleur selon un autre mode de réalisation de l'invention.

Dans ce mode de réalisation, le faisceau 12 d'échange de chaleur comporte toujours un empilement de plaques 20 tel que décrit précédemment.

Le faisceau 12 d'échange de chaleur est en outre muni de moyens 42 aptes à limiter la dispersion de l'air de suralimentation à travers les premiers canaux 38. Ici, ces premiers moyens sont réalisés sous la forme d'une plaque anti-dispersion 42, par exemple métallique, qui sera assujettie aux plaques 20 du faisceau 12 d'échange de chaleur, par exemple par brasage.

La plaque anti-dispersion 42 présente une forme en U avec deux ailes et une base. La base de la plaque anti-dispersion 42 est en contact avec les petits cotés des plaques 20 situés à proximité des tubulures de liaison. Les ailes de la plaque anti-dispersion 42 recouvrent, quant à elles, une partie des grands cotés des plaques 20 adjacents des tubulures de liaison. Autrement dit, la plaque anti-dispersion 42 enserre le faisceau 12 d'échange de chaleur au niveau de la région où se situent les tubulures de liaisons 34.

Une telle disposition de la plaque anti-dispersion permet d'empêcher l'air de suralimentation circulant dans les premiers canaux 38 de traverser le faisceau au niveau d'une portion de celui-ci, à savoir celle située à l'aplomb des tubulures de liaison qui ne serait pas munie d'intercalaire.

Dans le mode de réalisation illustré à la figure 2, le faisceau 12 d'échange de chaleur comporte en outre deux lames dites d'extrémités 44 et 46 situées aux deux extrémités de l'empilement de plaques 20.

La lame d'extrémité 46 se situe, une fois le faisceau 12 d'échange de chaleur inséré dans le boîtier 18, en vis-à-vis de la paroi de fond 32 du boîtier 18.

La lame d'extrémité 44, ici réalisée sous la forme d'une plaque rectangulaire, comporte les tubulures d'entrée 22 et de sortie 24 pour le liquide de refroidissement moteur et forme le couvercle du boîtier 18.

La lame d'extrémité 44 comporte en outre quatre excroissances 48-1, 48-2, 48-3 et 48-4 situées à chaque extrémité ou coin de la lame d'extrémité 44. Ces excroissances 48-1, 48-2, 48-3 et 48-4 sont munies d'ouvertures aptes à venir en regard d'ouvertures homologues situées sur le boîtier 18. Les ouvertures permettront la fixation et le maintien de la lame d'extrémité 46 et donc du faisceau 12 d'échange de chaleur dans le boîtier 18, par exemple, par l'intermédiaire de vis.

Selon le mode de réalisation illustré à la figure 3, les plaques 20-1 et 20-2 appelées respectivement première et deuxième plaques forme une paire de plaques 42-1.

L'espacement entre les deux plaques 20-1 et 20-2 formant une paire de plaques 42 permet de définir le second canal 40 pour la circulation du liquide de refroidissement moteur. Autrement dit, les seconds canaux 40 pour la circulation du liquide de refroidissement moteur sont définis par deux plaques adjacentes d'une même paire de plaques 42.

Chaque second canal 40 présente une hauteur dite première hauteur h1. Dans un mode de réalisation particulier de l'invention, la première hauteur h1 est comprise entre 0.3 et 15 mm.

Les tubulures de liaison 34-A de la deuxième plaque 20-2 appartenant à la première paire 42-1 sont en communication avec les tubulures de liaison 34-B d'une plaque 20-3 voisine appartenant à une seconde paire de plaques 42-2 voisine (seule la plaque supérieure 20-3 de la seconde paire de plaques 42-2 a été représentée sur la figure 4). Ceci permet d'établir une communication, pour le liquide de refroidissement du moteur, entre les paires de plaques 42-1 et 42-2.

Autrement dit, le refroidisseur d'air de suralimentation comporte au moins un faisceau 12 d'échange de chaleur, ledit faisceau 12 comportant un empilement de plaques 20 définissant des premiers canaux 38 pour la circulation d'un premier fluide et des seconds canaux 40 pour la circulation d'un second fluide, refroidisseur dans lequel les plaques 20 sont constitués de tôles embouties et comportent des tubulures de liaison 34 pour la circulation du liquide de refroidissement dans les seconds canaux 40, et dans lequel deuxdites plaques adjacentes 20-1 et 20-2 forment une paire de plaque 42, lesdites tubulures de liaison 34 permettant d'établir une communication, pour le second fluide, entre des paires de plaques 42-1 et 42-2.

Les tubulures de liaison 34 sont encore appelées têtes de lame.

Ainsi, les tubulures de liaison d'une paire de plaque s'emboîtent dans les tubulures de liaison d'une paire de plaques adjacente. Pour ce faire, il est prévu une partie mâle et une partie femelle sur chaque plaque.

L'extrémité de la tubulure de liaison 34-B comporte un chanfrein qui permet l'insertion de la tubulure de liaison 34-B à l'intérieur de la tubulure de liaison 34-A.

Ainsi, la tubulure de liaison 34-A forme la partie femelle de l'emboîtement et la tubulure de liaison 34-B forme la partie mâle de l'emboîtement.

De manière alternative, on pourra prévoir que l'extrémité de la tubulure de liaison 34-B formant la partie mâle présente une inclinaison d'environ 5° sur tout le pourtour de ladite tubulure, cette inclinaison étant de forme conique.

Ici, la configuration des tubulures de liaison permet d'avoir un faisceau d'échange de chaleur composé d'un seul type de plaque. Autrement dit, toutes les plaques faisant partie du faisceau d'échange de chaleur sont identiques.

La dimension de la tubulure 34-B dite première tubulure est prévue juste inférieure à la dimension de la tubulure 34-A dite seconde tubulure.

Ainsi, lors de l'assemblage du faisceau, la première tubulure d'une plaque n d'une paire de plaques va s'introduire dans une seconde tubulure de la plaque n+1 de la paire de plaque adjacente. De même, la seconde tubulure d'une plaque n d'une paire de plaques va recevoir la première tubulure de la plaque n+1 de la paire de plaque adjacente.

Le pas P séparant les deux plaques 20-1 et 20-3 pourra, par exemple être de 7.2 mm.

La figure 4 représente un exemple d'une plaque du faisceau d'échange de chaleur selon l'invention.

Comme déjà décrit plus haut, une plaque 20 comporte deux grands cotés 50-1 et 50-2 et deux petits cotés 52-1 et 52-2. Les petits cotés s'étendent selon une direction dite transversale et les grands cotés selon une direction dite longitudinale. Les grands cotés et les petits cotés présentent chacun une longueur appelée respectivement longueur et largeur de plaque.

Les plaques 20 comportent en outre deux tubulures de liaison 34 disposées sur un des petits cotés des plaques 20. Ici, les tubulures de liaison 34 sont situés à proximité du petit coté 52-1.

Les tubulures de liaison 34 sont ici de forme oblongue. Autrement dit, les tubulures de liaison 34 sont plus longues que larges et comportent deux cotés parallèles reliés par des portions arrondies au niveau des extrémités des cotés parallèles.

On entend ici par longueur, la distance séparant les deux extrémités arrondies de chaque tubulure de liaison 34 dans la direction parallèle à la direction du petit coté 52-1 de la plaque 20. On entend par largeur, la distance séparant les deux cotés parallèles de chaque tubulure de liaison 34 dans la direction perpendiculaire à un des petits cotés 52-1 ou 52-2 de la plaque 20, c'est-à-dire la direction parallèle à un des grands cotés 50-1 ou 50-2 de la plaque 20.

Chaque plaque 20 comporte en outre des moyens de positionnement 54 d'une plaque par rapport à l'autre.

Dans l'exemple représenté à la figure 5, les moyens de positionnement 54 se situent sur le petit coté 52-2 qui est situé à l'opposé du petit coté 52-1 situé à proximité des tubulures de liaison 34.

Ici, les moyens de positionnement sont formés par deux bossages 54 situés chacun à une extrémité du petit coté 52-2. Chaque bossage est inversé par rapport à l'autre. Autrement dit, un des bossages 54 est situé dans la même direction que les tubulures de liaison 34 tandis que l'autre bossage est réalisé dans la direction opposée.

De plus, chaque plaque 20 comporte des emboutis ou bossages 56. Les emboutis 56 sont aptes à créer des turbulences dans le liquide de refroidissement circulant dans les seconds canaux 40.

Autrement dit, les emboutis 56 sont des perturbateurs du liquide de refroidissement circulant dans les seconds canaux 40.

Ces emboutis 56 aptes à créer des turbulences font saillie vers l'intérieur des seconds canaux 40 de manière à provoquer un écoulement turbulent du liquide de refroidissement et à améliorer l'échange de chaleur entre le liquide de refroidissement qui circule dans les seconds canaux 40 et l'air de suralimentation qui circule dans les premiers canaux 38.

Les emboutis 56 aptes à créer des turbulences présente une hauteur dite seconde hauteur h2 qui est strictement inférieure à la première hauteur h1 des seconds canaux 40.

Dans un mode de réalisation, la seconde hauteur des emboutis 56 aptes à créer des turbulences représente entre 20 et 40% de la première hauteur des seconds canaux 40.

Ici, les emboutis 56 aptes à créer des turbulences sont de forme oblongue. On entend par forme oblongue, des bossages ou emboutis 56 aptes à créer des turbulences plus larges que longs. Les cotés parallèles de la forme oblongue des emboutis 56 sont, ici parallèles aux petits cotés de la plaque 20.

Il est possible de prévoir des emboutis 56 aptes à créer des turbulences de forme ronde ou en forme de goutte d'eau, notamment quand ces emboutis 56 se situent dans des demi-tours ou des virages du second canal de circulation.

Dans le mode de réalisation illustré à la figure 4, les emboutis 56 aptes à créer des turbulences sont répartis par rangées de trois emboutis 56.

Une fois qu'une paire de plaques telle que décrite auparavant est assemblée, les rangées d'emboutis aptes à créer des turbulences de la première plaque de la paire de plaque viennent s'intercaler entre les rangées d'emboutis aptes à créer des turbulences de la deuxième plaque de la paire de plaque.

Autrement dit, les emboutis 56 aptes à créer des turbulences d'une plaque X appartenant à une paire de plaques ne sont jamais en vis-à-vis les emboutis 56 aptes à créer des turbulences de la plaque X+1 de la même paire de plaques et ne sont donc pas en contact. Autrement dits, les emboutis 56 d'une plaque X d'une paire de plaques ne forment pas de cloison avec les emboutis de la plaque X+1 de la même paire de plaques.

Dans le mode de réalisation représentée à la figure 4, l'axe de symétrie de la plaque est un axe dit longitudinal, parallèle aux grands cotés 50-1 et 50-2 de la plaque 20.

La plaque 20 est en outre munie d'emboutis 58 dits jointifs. Dans le mode de réalisation de la figure 4, la plaque 20 comporte cinq emboutis jointifs 58 qui sont réalisés sous la forme de nervures longitudinales.

On peut prévoir des emboutis jointifs dits de renforts mécaniques, réalisés sous la forme de bossages, à l'intérieur d'une passe de circulation pour le liquide de refroidissement. De tels emboutis de renforts mécaniques pourront aussi être prévus au niveau des retours reliant deux passes de circulation pour le liquide de refroidissement.

Une fois qu'une paire de plaques telle que décrite auparavant est assemblée, les emboutis jointifs 58 de chacune des plaques formant la paire de plaque se trouvent en vis-à-vis et coopèrent ensemble de manière à former des passes de circulation pour le liquide de refroidissement.

De même, dans le cas où on prévoit des emboutis jointifs de renforts mécaniques et une fois qu'une paire de plaques telle que décrite auparavant est assemblée, ces emboutis de renforts mécaniques se trouvent en vis-à-vis et coopèrent ensemble pour renforcer la tenue mécanique de la paire de plaques.

Les passes de circulation pour le liquide de refroidissement sont reliées entre elles par l'intermédiaire de retours ou demi-tours qui se situe généralement à proximité des petits cotés de la plaque 20.

Autrement dit, deux plaques adjacentes forment une paire de plaque et définissent un second canal. Le second canal présentant au moins une passe de circulation 40-1, 40-2, 40-3, 40-4 pour le second fluide et la passe de circulation s'étend dans une direction parallèle auxdits grands cotés 50-1 et 50-2.

Le nombre de passes de circulation pour le liquide de refroidissement pourra notamment être compris entre 2 et 8.

Dans le mode de réalisation illustré à la figure 4, le nombre de passes de circulation pour le liquide de refroidissement est de 4 qui sont reliées par 3 demi-tours.

Selon un mode de réalisation, le ratio nombre de passes de circulation/largeur de plaque est compris entre 1/10 et 1/60 cm-1.

Chaque passe présente une longueur qui est sensiblement égale à la longueur du grand coté de la plaque 20 et une largeur de passe qui pourra par exemple être comprise entre 10 et 60 mm.

On entend par largeur de passe, la distance séparant les deux cotés parallèles de chaque passe dans la direction parallèle à la direction d'un des petits cotés 52-1 ou 52-2 de la plaque 20, c'est-à-dire la direction perpendiculaire à un des grands cotés 50-1 ou 50-2 de la plaque 20.

Un mode de réalisation propose que la longueur des tubulures de liaison 34 soit comprise entre 50 et 200% de la largeur d'une passe.

Selon un autre mode de réalisation et quand le nombre de passe est au moins égal à quatre, on peut prévoir que l'espace de la plaque situé entre les deux tubulures de liaison 34 situé proche du petit coté 52-1 soit utilisé pour accueillir un demi-tour entre deux passes successives de circulation. Ceci permet de refroidir efficacement tous les plis de l'intercalaire placé dans le premier canal 38.

Les figures 5A et 5B représentent, de manière partielle, un assemblage d'une paire de plaques 42 formant un dit second canal.

La paire de plaque 42 est ici formée par deux plaques 20-1 et 20-2 appelées respectivement première et deuxième plaques.

Dans ce mode de réalisation, les emboutis 56 aptes à créer des turbulences sont répartis par rangées selon une direction parallèle aux grands cotés (seul le grand coté 50-1 des plaques 20-1 et 20-2 est ici représenté). Les emboutis 56 font saillie à l'intérieur du second canal 40 pour la circulation du liquide de refroidissement.

Comme plus particulièrement visible à la figures 5A, les emboutis 56 aptes à créer des turbulences de la première plaque 20-1 de la paire de plaque 42 s'intercalent entre les emboutis 56 aptes à créer des turbulences de la deuxième plaque 20-2 de la paire de plaque 42. L'intercalation des emboutis 56 aptes à créer des turbulences s'effectue aussi bien dans la direction longitudinale que dans la direction transversale.

En outre, les emboutis jointifs 58 de chacune des plaques 20-1 et 20-2 sont en vis-à-vis de manière à former au moins une passe de circulation pour le liquide de refroidissement.

La figure 6 représente une vue de détail d'une plaque conforme à la présente invention.

Les emboutis aptes à créer des turbulences 56 sont répartis, dans la ou les passes de circulation par rangées, selon une première direction Δ1 sensiblement parallèle aux grands cotés et/ou selon une seconde direction Δ2 inclinée par rapport aux grands cotés d'un angle · strictement compris entre 0 et 90°.

La distance longitudinale d séparant deux rangées adjacentes selon la première direction Δ1 d'emboutis 56 aptes à créer des turbulences dans la direction parallèle aux grands cotés 50-1 ou 50-2 de la plaque 20 pourra être comprise, par exemple, entre 1 et 50 mm, et sera de préférence de 10 mm.

La distance longitudinale d1 séparant deux emboutis 56 aptes à créer des turbulences d'une même rangée selon la première directïon Δ1 dans la direction parallèle aux grands cotés 50-1 ou 50-2 de la plaque 20 pourra être comprise, par exemple, entre 1 et 20 mm, et sera de préférence de 1,5 mm.

La distance dite distance transversale T séparant deux emboutis 56 aptes à créer des turbulences appartenant à une même rangée dans la direction parallèle aux petits cotés 52-1 ou 52-2 de la plaque 20 pourra être comprise, par exemple, entre 1 et 20 mm, et sera de préférence de 7 mm.

La distance séparant un embouti 56 apte à créer de la turbulence dit premier embouti et le bord d'une passe de circulation, pourra être compris entre 1 et 20 mm, de préférence entre 3 et 5mm.

Selon un mode de réalisation de l'invention, chaque dite passe comporte au moins 1 embouti 56 apte à créer des turbulences.

## Revendications

1. Refroidisseur d'air de suralimentation (10) pour véhicule automobile comportant au moins un faisceau (12) d'échange de chaleur, ledit faisceau (12) comportant un empilement de plaques (20) définissant des premiers canaux (38) pour la circulation d'un premier fluide et des seconds canaux (40) pour la circulation d'un second fluide, lesdits seconds canaux (40) présentant une hauteur (h1) dite première hauteur, lesdites plaques (20) étant constituées de tôles embouties et comportant des tubulures de liaison (34) pour la circulation du liquide de refroidissement dans lesdits seconds canaux (40), deuxdites plaques adjacentes (20-1, 20-2) formant une paire de plaque (42), lesdites tubulures de liaison (34) permettant d'établir une communication, pour le second fluide, entre des paires de plaques (42-1, 42-2), **caractérisé en ce que** lesdites tubulures de liaison (34) d'une paire de plaques (42-1) s'emboîtent dans les tubulures de liaison (34) d'une paire de plaques adjacente (42-2).

2. Refroidisseur d'air de suralimentation selon la revendication 1, dans lequel chaque plaque (20) comporte une tubulure de liaison (34-A) formant une partie femelle de l'emboîtement, et une tubulure de liaison (34-B) formant une partie mâle de l'emboîtement.

3. Refroidisseur d'air de suralimentation selon la revendication précédente, dans lequel l'extrémité de la tubulure de liaison (34-B) comporte un chanfrein qui permet l'insertion de la tubulure de liaison (34-B) à l'intérieur de la tubulure de liaison (34-A).

4. Refroidisseur d'air de suralimentation selon l'une des revendications 2 à 3, dans lequel l'extrémité de la tubulure de liaison (34-B) formant la partie mâle présente une inclinaison de forme conique sur tout le pourtour de ladite tubulure.

5. Refroidisseur d'air de suralimentation selon l'une des revendications 2 à 4, dans lequel la dimension de la tubulure de liaison (34-B) est inférieure à la dimension de la tubulure de liaison (34-A).

6. Refroidisseur d'air de suralimentation selon l'une des revendications précédentes, dans lequel les tubulures de liaison (34) sont de forme oblongue.

7. Refroidisseur d'air de suralimentation selon l'une des revendications précédentes, dans lequel toutes les plaques (20) faisant partie du faisceau d'échange de chaleur sont identiques.

8. Refroidisseur d'air de suralimentation selon l'une des revendications précédentes, dans lequel lesdites plaques (20) comportent des emboutis (56) d'une hauteur dite seconde hauteur (h2) strictement inférieure à ladite première hauteur (h1), lesdits emboutis (56) faisant saillie vers l'intérieur des seconds canaux (40) et étant aptes à créer des turbulences dans le second fluide circulant dans les seconds canaux.

9. Refroidisseur d'air de suralimentation selon la revendication 8, dans lequel la seconde hauteur (h2) desdits emboutis (56) représente entre 20 et 40 % de la première hauteur (hl) desdits seconds canaux (40).

10. Refroidisseur d'air de suralimentation selon l'une des revendications précédentes, dans lequel deuxdites plaques adjacentes (20-1, 20-2) forment une paire de plaque (42) et dans lequel des emboutis (56) aptes à créer des turbulences d'une première plaque (20-1) de la paire de plaque (42) s'intercalent entre les emboutis (56) aptes à créer des turbulences d'une deuxième plaque (20-2 ) de la paire de plaque (42).

11. Refroidisseur d'air de suralimentation selon l'une des revendications 8 à 10, dans lequel lesdites plaques présentent deux grands cotés (50-1, 50-2) et deux petits cotés (52-1, 52-2) et dans lequel deuxdites plaques adjacentes (20-1, 20-2) forment une paire de plaque (42) et définissent ledit second canal (40), ledit second canal présentant au moins un passe de circulation (40-1, 40-2, 40-3, 40-4) pour ledit second fluide s'étendant dans une direction parallèle auxdits grands cotés (50-1, 50-2).

12. Refroidisseur d'air de suralimentation selon la revendication précédente, dans lequel lesdits emboutis (56) sont répartis, dans la ou lesdites passes de circulation (40-1, 40-2, 40-3, 40-4) par rangées, selon une première direction (Δ1) sensiblement parallèle auxdits grands cotés (50-1, 50-2) et/ou selon une seconde direction (Δ2) inclinée par rapport auxdits grands cotés (50-1, 50-2) d'un angle (•) strictement compris entre 0 et 90°.

13. Refroidisseur d'air de suralimentation selon la revendication précédente, dans lequel la distance longitudinale (d), dans la direction parallèle aux grands cotés (50-1, 50-2) de la plaque (20), séparant deux rangées d'emboutis (56) adjacentes selon la première direction (Δ1) est comprise entre 1 et 50 mm.

14. Refroidisseur d'air de suralimentation selon la revendication 12 ou 13, dans lequel la distance longitudinale (d1), dans la direction parallèle aux grands cotés (50-1, 50-2) de la plaque (20), séparant deux emboutis (56) selon la première direction (1) d'une même rangée est comprise entre 1 et 20 mm.

15. Refroidisseur d'air de suralimentation selon l'une des revendications 12 à 14, dans lequel la distance dite distance transversale T, dans la direction parallèle aux petits cotés (52-1, 52-2) de la plaque (20), séparant deux emboutis (56) appartenant à une même rangée selon la seconde direction (2) est comprise entre 1 et 20 mm.

## Patentansprüche

1. Ladeluftkühler (10) für ein Kraftfahrzeug, umfassend mindestens einen Wärmeaustauschkern (12), wobei der Kern (12) einen Plattenstapel (20) umfasst, der erste Kanäle (38) für die Zirkulation eines ersten Fluids und zweite Kanäle (40) für die Zirkulation eines zweiten Fluids definiert, wobei die zweiten Kanäle (40) eine so genannte erste Höhe (h1) aufweisen, wobei die Platten (20) von gezogenen Blechen gebildet sind und Verbindungsrohre (34) für die Zirkulation der Kühlflüssigkeit in den zweiten Kanälen (40) umfassen, wobei zwei aneinandergrenzende Platten (20-1, 20-2) ein Plattenpaar (42) bilden, wobei es die Verbindungsrohre (34) ermöglichen, für das zweite Fluid eine Kommunikation zwischen Plattenpaaren (42-1, 42-2) herzustellen, **dadurch gekennzeichnet, dass** die Verbindungsrohre (34) eines Plattenpaares (42-1) in die Verbindungsrohre (34) eines angrenzenden Plattenpaares (42-2) eingesteckt sind.

2. Ladeluftkühler nach Anspruch 1, bei dem jede Platte (20) ein Verbindungsrohr (34-A), das einen Aufnahmeteil der Einsteckverbindung bildet, und ein Verbindungsrohr (34-B), das einen Einsteckteil der Einsteckverbindung bildet, umfasst.

3. Ladeluftkühler nach dem vorhergehenden Anspruch, bei dem das Ende des Verbindungsrohrs (34-B) eine Schräge umfasst, die das Einsetzen des Verbindungsrohrs (34-B) in das Innere des Verbindungsrohrs (34-A) ermöglicht.

4. Ladeluftkühler nach einem der Ansprüche 2 bis 3, bei dem das Ende des Verbindungsrohrs (34-B), das den Einsteckteil bildet, eine Neigung von konischer Form auf dem gesamten Umfang des Rohrs aufweist.

5. Ladeluftkühler nach einem der Ansprüche 2 bis 4, bei dem die Dimension des Verbindungsrohrs (34-B) kleiner als die Dimension des Verbindungsrohrs (34-A) ist.

6. Ladeluftkühler nach einem der vorhergehenden Ansprüche, bei dem die Verbindungsrohre (34) eine längliche Form haben.

7. Ladeluftkühler nach einem der vorhergehenden Ansprüche, bei dem alle Platten (20), die Teil des Wärmetauschkerns sind, identisch sind.

8. Ladeluftkühler nach einem der vorhergehenden Ansprüche, bei dem die Platten (20) Einstülpungen (56) mit einer so genannten zweiten Höhe (h2), die unbedingt kleiner als die erste Höhe (h1) ist, umfassen, wobei die Einstülpungen (56) in das Innere der zweiten Kanäle (40) ragen und geeignet sind, Wirbel in dem zweiten Fluid, das in den zweiten Kanälen zirkuliert, zu erzeugen.

9. Ladeluftkühler nach Anspruch 8, bei dem die zweite Höhe (h2) der Einstülpungen (56) zwischen 20 und 40 % der ersten Höhe (h1) der zweiten Kanäle (40) beträgt.

10. Ladeluftkühler nach einem der vorhergehenden Ansprüche, bei dem zwei aneinandergrenzende Platten (20-1, 20-2) ein Plattenpaar (42) bilden, und bei dem Einstülpungen (56) einer ersten Platte (20-1) des Plattenpaars (42), die geeignet sind, Wirbel zu erzeugen, zwischen den Einstülpungen (56) einer zweiten Platte (20-2) des Plattenpaars (42), die geeignet sind, Wirbel zu erzeugen, angeordnet sind.

11. Ladeluftkühler nach einem der Ansprüche 8 bis 10, bei dem die Platten zwei lange Seiten (50-1, 50-2) und zwei kurze Seiten (52-1, 52-2) aufweisen, und bei dem zwei aneinandergrenzende Platten (20-1, 20-2) ein Plattenpaar (42) bilden und den zweiten Kanal (40) definieren, wobei der zweite Kanal mindestens einen Zirkulationsweg (40-1, 40-2, 40-3, 40-4) für das zweite Fluid aufweist, der sich in eine Richtung parallel zu den langen Seiten (50-1, 50-2) erstreckt.

12. Ladeluftkühler nach dem vorhergehenden Anspruch, bei dem die Einstülpungen (56) in dem oder den Zirkulationswegen (40-1, 40-2, 40-3, 40-4) in Reihen verteilt sind, und zwar entlang einer ersten Richtung (Δ1) im Wesentlichen parallel zu den langen Seiten (50-1, 50-2) und/oder entlang einer zweiten Richtung (Δ2), die in Bezug zu den langen Seiten (50-1, 50-2) um einen Winkel (•) unbedingt zwischen 0 und 90° geneigt ist.

13. Ladeluftkühler nach dem vorhergehenden Anspruch, bei dem der Längsabstand (d) in die Richtung parallel zu den langen Seiten (50-1, 50-2) der Platte (20) zwischen zwei aneinandergrenzenden Reihen von Einstülpungen (56) entlang der ersten Richtung (Δ1) zwischen 1 und 50 mm beträgt.

14. Ladeluftkühler nach Anspruch 12 oder 13, bei dem der Längsabstand (d1) in die Richtung parallel zu den langen Seiten (50-1, 50-2) der Platte (20) zwischen zwei Einstülpungen (56) entlang der ersten Richtung (1) einer selben Reihe zwischen 1 und 20 mm beträgt.

15. Ladeluftkühler nach einem der Ansprüche 12 bis 14, bei dem der so genannte Querabstand T in die Richtung parallel zu den kurzen Seiten (52-1, 52-2) der Platte (20) zwischen zwei Einstülpungen (56), die einer selben Reihe entlang der zweiten Richtung (2) angehören, zwischen 1 und 20 mm beträgt.

## Claims

1. Motor vehicle charge air cooler (10) comprising at least one heat exchange core bundle (12), the said core bundle (12) comprising a stack of plates (20) defining first channels (38) for the circulation of a first fluid and second channels (40) for the circulation of a second fluid, the said second channels (40) having a height (h1) referred to as the first height, the said plates (20) being made up of pressed sheets and comprising connecting nozzles (34) for circulating the coolant in the said second channels (40), two said adjacent plates (20-1, 20-2) forming a plate pair (42), the said connecting nozzles (34) making it possible to establish a communication, for the second fluid, between plate pairs (42-1, 42-2), **characterized in that** the said connecting nozzles (34) of one plate pair (42-1) can be pushed into the connecting nozzles (34) of an adjacent plate pair (42-2).

2. Charge air cooler according to Claim 1, in which each plate (20) comprises a connecting nozzle (34-A) that forms a female part of the pushed-together connection and a connecting nozzle (34-B) that forms a male part of the pushed-together connection.

3. Charge air cooler according to the preceding claim, in which the end of the connecting nozzle (34-B) is chamfered to allow the connecting nozzle (34-B) to be inserted into the connecting nozzle (34-A).

4. Charge air cooler according to one of Claims 2 and 3, in which the end of the connecting nozzle (34-B) that forms the male part has an inclination of conical shape around the entire periphery of the said nozzle.

5. Charge air cooler according to one of Claims 2 to 4, in which the dimension of the connecting nozzle (34-B) is less than the dimension of the connecting nozzle (34-A).

6. Charge air cooler according to one of the preceding claims, in which the connecting nozzles (34) are of oblong shape.

7. Charge air cooler according to one of the preceding claims, in which all the plates (20) that form part of the heat exchange core bundle are identical.

8. Charge air cooler according to one of the preceding claims, in which the said plates (20) have pressings (56) of a height referred to as the second height (h2) that is strictly less than the said first height (h1), the said pressings (56) projecting towards the inside of the second channels (40) and being able to create turbulence in the second fluid circulating through the second channels.

9. Charge air cooler according to Claim 8, in which the second height (h2) of the said pressings (56) represents between 20 and 40% of the first height (h1) of the said second channels (40).

10. Charge air cooler according to one of the preceding claims, in which two said adjacent plates (20-1, 20-2) form a plate pair (42) and in which turbulence-creating pressings (56) of a first plate (20-1) of the plate pair (42) sit between the turbulence-creating pressings (56) of a second plate (20-2) of the plate pair (42).

11. Charge air cooler according to one of Claims 8 to 10, in which said plates have two long sides (50-1, 50-2) and two short sides (52-1, 52-2) and in which two said adjacent plates (20-1, 20-2) form a plate pair (42) and define the said second channel (40), the said second channel having at least one circulation pass (40-1, 40-2, 40-3, 40-4) for the said second fluid extending in a direction parallel to the said long sides (50-1, 50-2).

12. Charge air cooler according to the preceding claim, in which the said pressings (56) are distributed, within the said circulation pass or passes (40-1, 40-2, 40-3, 40-4) in rows in a first direction (Δ1) substantially parallel to the said long sides (50-1, 50-2) and/or in a second direction (Δ2) that is inclined with respect to the said long sides (50-1, 50-2) by an angle (•) strictly comprised between 0 and 90°.

13. Charge air cooler according to the preceding claim, in which the longitudinal distance (d), in the direction parallel to the long sides (50-1, 50-2) of the plate (20), separating two adjacent rows of pressings (56) in the first direction (Δ1) is between 1 and 50 mm.

14. Charge air cooler according to Claim 12 or 13, in which the longitudinal distance (d1), in the direction parallel to the long sides (50-1, 50-2) of the plate (20), separating two pressings (56) of one and the same row in the first direction (1) is between 1 and 20 mm.

15. Charge air cooler according to one of Claims 12 to 14, in which the distance referred to as the transverse distance T, in the direction parallel to the short sides (52-1, 52-2) of the plate (20), separating two pressings (56) belonging to one and the same row in the second direction (2) is between 1 and 20 mm.
